# EUROPEAN PATENT APPLICATION

(11) **EP 4 737 327 A1**
(43) Date of publication of application: **06.05.2026**
(21) Application number: 24831837.0
(22) Date of filing: 21.06.2024
(51) Int. Cl.: B64D 37/30, B64D 37/34

(54) **HYDROGEN FUEL SUPPLY SYSTEM**

(30) Priority: 30.06.2023 JP 2023107957
(71) Applicant: KAWASAKI JUKOGYO KABUSHIKI KAISHA, Kobe-shi, Hyogo 650-8670 (JP)
(72) Inventor: KUSUMOTO, Yoshiaki, Kobe-shi, Hyogo 650-8670 (JP); OSHIMA, Ryosuke, Kobe-shi, Hyogo 650-8670 (JP); TOMONAGA, Satoshi, Kobe-shi, Hyogo 650-8670 (JP); TAGUCHI, Hideyuki, Tokyo 182-8522 (JP)
(74) Representative: Dantz, Jan Henning
(86) International application number: PCT/JP2024/022488
(87) International publication number: WO 2025/004976

(57) **Abstract**

A hydrogen fuel supply system is a hydrogen fuel supply system of an aircraft including an engine and includes: a fuel tank storing hydrogen fuel in a liquid phase; a fuel supply passage connecting the fuel tank to the engine; a pressure pump that is located in the fuel supply passage and pressurizes the hydrogen fuel to critical pressure or more; and a sensor that is located downstream of the pressure pump in the fuel supply passage and measures pressure of the hydrogen fuel which has passed through the pressure pump.

## Description

### Technical Field

The present disclosure relates to a hydrogen fuel supply system of an aircraft including an engine.

### Background Art

PTL 1 discloses a hydrogen fuel supply system in an aircraft. In this system, liquid hydrogen in a fuel tank is pressurized by a pump and heated by a heat exchanger, and the liquid hydrogen in a gas phase or a supercritical phase is supplied to an engine.

### Citation List

### Patent Literature

PTL 1: U.S. Patent Application Publication No. 2022/0145801

### Summary of Invention

### Technical Problem

When hydrogen fuel changes from a liquid phase to a gas phase in a fuel supply passage during fuel supply, influences, such as a significant change in volume, occur. When the hydrogen fuel is in a supercritical phase, a phase change from the liquid phase to the gas phase can be avoided, and the hydrogen fuel can be stably supplied to the engine.

When the hydrogen fuel is pressurized to critical pressure or more, and then heated to a critical temperature or more, the hydrogen fuel can be changed to the supercritical phase. When changing the hydrogen fuel to the supercritical phase by this method, first, the hydrogen fuel is required to be set to the critical pressure or more.

An object of one aspect of the present disclosure is to stabilize the operation of an engine that uses hydrogen fuel in a supercritical phase.

### Solution to Problem

A hydrogen fuel supply system according to one aspect of the present disclosure is a hydrogen fuel supply system of an aircraft including an engine and includes: a fuel tank storing hydrogen fuel in a liquid phase; a fuel supply passage connecting the fuel tank to the engine; a pressure pump that is located in the fuel supply passage and pressurizes the hydrogen fuel to critical pressure or more; and a sensor that is located downstream of the pressure pump in the fuel supply passage and measures pressure of the hydrogen fuel which has passed through the pressure pump.

### Advantageous Effects of Invention

According to one aspect of the present disclosure, when the hydrogen fuel is pressurized by the pressure pump to the critical pressure or more, the sensor located downstream of the pressure pump can measure the pressure of the hydrogen fuel. Therefore, the operation of the pressure pump can be controlled in accordance with the pressure of the hydrogen fuel, and the operation of the engine that uses the hydrogen fuel in the supercritical phase can be stabilized.

### Brief Description of Drawings

FIG. 1 is a plan view of an aircraft including a hydrogen fuel supply system according to Embodiment 1.
FIG. 2 is a phase diagram showing the relationship of the phase of hydrogen to temperature and pressure.
FIG. 3 is a block diagram of the hydrogen fuel supply system of FIG. 1.
FIG. 4 is a block diagram of the hydrogen fuel supply system according to Embodiment 2.

### Description of Embodiments

Hereinafter, embodiments will be described with reference to the drawings. In the present disclosure, an aircraft denotes a machine that can move in the air. Examples of the aircraft include fixed wing aircrafts, rotary wing aircrafts, and unmanned flying objects.

### Embodiment 1

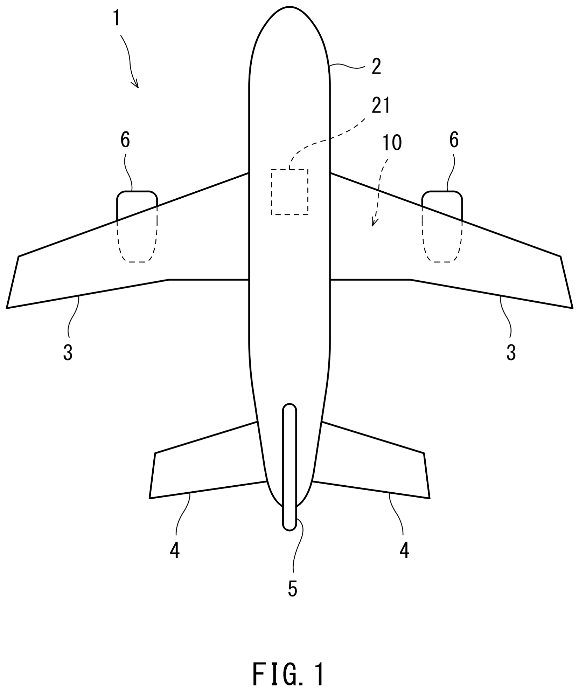

FIG. 1 is a plan view of an aircraft 1 including a hydrogen fuel supply system 10 according to Embodiment 1. As shown in FIG. 1, the aircraft 1 includes, for example, a fuselage 2, a pair of main wings 3, horizontal stabilizers 4, a vertical stabilizer 5, and gas turbine engines 6. The fuselage 2 extends in a front-rear direction of the aircraft 1 and defines an occupant space therein. The main wings 3 are connected to an intermediate portion of the fuselage 2 in the front-rear direction and project from the fuselage 2 in a left-right direction of the aircraft 1. The horizontal stabilizers 4 project from a rear portion of the fuselage 2 in the left-right direction of the aircraft 1. The vertical stabilizer 5 projects upward from the rear portion of the fuselage 2. The gas turbine engines 6 are connected to the respective main wings 3. The hydrogen fuel supply system 10 is mounted on the fuselage 2, the main wings 3, and the gas turbine engines 6. A fuel tank 21 is located in the fuselage 2 but may be located in the main wing 3. To be specific, a part of the fuel tank 21 or the entire fuel tank 21 is located in the fuselage 2 or the main wing 3.

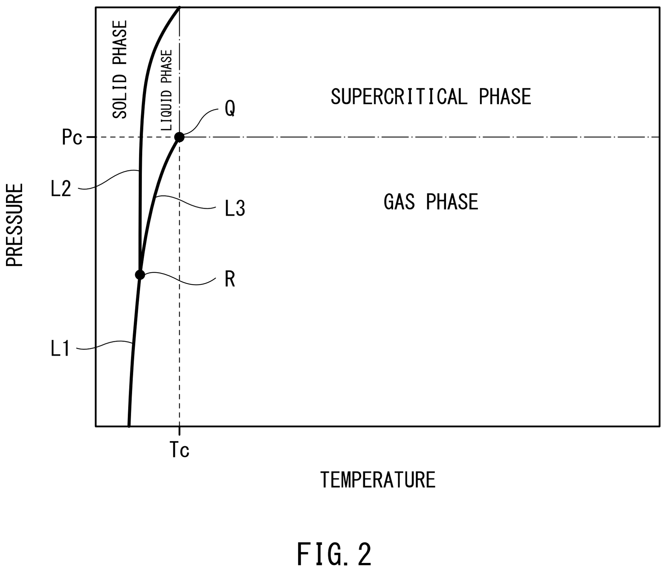

FIG. 2 is a phase diagram showing the relationship of the phase of hydrogen to temperature and pressure. As shown in FIG. 2, in the phase diagram of the hydrogen, a solid phase and a gas phase are separated by a sublimation line L1 as a boundary, the solid phase and a liquid phase are separated by a melting line L2 as a boundary, and the liquid phase and the gas phase are separated by a boiling line L3 as a boundary. An intersection R of the sublimation line L1, the melting line L2, and the boiling line L3 is referred to as a triple point. The hydrogen becomes a supercritical phase when the pressure of the hydrogen is higher than critical pressure Pc, and the temperature of the hydrogen is higher than a critical temperature Tc. In the phase diagram, a point defined by the critical pressure Pc and the critical temperature Tc is referred to as a critical point Q. The critical pressure Pc is about 1.3 MPa, and the critical temperature Tc is about -240°C.

In the present embodiment, in the phase diagram of FIG. 2, the hydrogen fuel is prevented from changing from the liquid phase to the gas phase across the boiling line L3. To be specific, when the hydrogen fuel is in the liquid phase, the hydrogen fuel is pressurized to the critical pressure Pc or more. After that, when the temperature of the hydrogen fuel is increased to the critical temperature Tc or more, the hydrogen fuel shifts from the liquid phase to the supercritical phase.

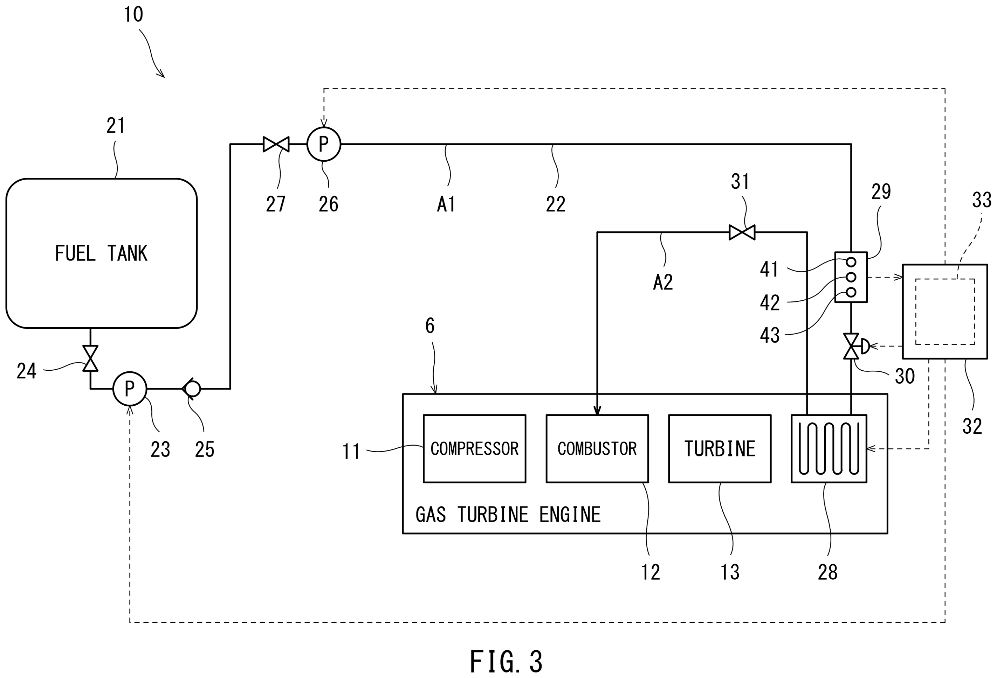

To realize the shift from the liquid phase to the supercritical phase, as shown in FIG. 3 described below, the hydrogen fuel in the liquid phase which has flowed from the fuel tank 21 to a fuel supply passage 22 is pressurized by a pressure pump 26 to the critical pressure Pc or more. When the temperature of the hydrogen fuel flowing from the pressure pump 26 toward the gas turbine engines 6 is increased by a heat exchanger 28 and the like to the critical temperature Tc or more, the hydrogen fuel shifts from the liquid phase to the supercritical phase. Thus, a boiling phenomenon in which the hydrogen fuel in the fuel supply passage 22 shifts from the liquid phase to the gas phase is prevented.

FIG. 3 is a block diagram of the hydrogen fuel supply system 10 of FIG. 1. As shown in FIG. 3, the hydrogen fuel supply system 10 includes the fuel tank 21. The fuel tank 21 stores the hydrogen fuel in the liquid phase. The fuel tank 21 is connected to the gas turbine engine 6 by the fuel supply passage 22. When the fuel tank 21 is located in the fuselage 2, the fuel supply passage 22 extends from the fuselage 2 through the main wing 3 to the gas turbine engine 6. When the fuel tank 21 is located in the main wing 3, the fuel supply passage 22 extends from the main wing 3 to the gas turbine engine 6. The gas turbine engine 6 includes a compressor 11, a combustor 12, and a turbine 13. The fuel supply passage 22 is connected to the combustor 12.

A feed pump 23 is located in the fuel supply passage 22. The feed pump 23 supplies the hydrogen fuel from the fuel tank 21 to the fuel supply passage 22. A shutoff valve 24 is located between the fuel tank 21 and the feed pump 23 in the fuel supply passage 22. A check valve 25 is located downstream of the feed pump 23 in the fuel supply passage 22.

The pressure pump 26 is located downstream of the check valve 25 in the fuel supply passage 22. The pressure pump 26 pressurizes the hydrogen fuel in the fuel supply passage 22 to the critical pressure Pc of hydrogen or more. For example, the pressure pump 26 pressurizes the hydrogen fuel in the liquid phase which has been supplied from the fuel tank 21 such that when the hydrogen fuel flowing through the fuel supply passage 22 reaches a belowdescribed control valve 30, the pressure of the hydrogen fuel is the critical pressure Pc of hydrogen or more. At the time when the pressure pump 26 has pressurized the hydrogen fuel to the critical pressure Pc or more, the temperature of the hydrogen fuel is lower than the critical temperature Tc. A shutoff valve 27 is located between the check valve 25 and the pressure pump 26 in the fuel supply passage 22.

The heat exchanger 28 is located downstream of the pressure pump 26 in the fuel supply passage 22. The heat exchanger 28 heats the hydrogen fuel flowing through the fuel supply passage 22 to the critical temperature Tc of hydrogen or more. The heat exchanger 28 is thermally connected to the gas turbine engine 6. To be specific, the heat exchanger 28 heats the hydrogen fuel in the fuel supply passage 22 by utilizing the heat of the gas turbine engine 6.

A sensor 29 is located downstream of the pressure pump 26 in the fuel supply passage 22. In the present embodiment, the sensor 29 is located downstream of the pressure pump 26 and upstream of the heat exchanger 28 in the fuel supply passage 22. It is desirable that the sensor 29 be located adjacent to the pressure pump 26, the heat exchanger 28, or both of them. In the present disclosure, the term "adjacent" denotes that no other fluid devices, such as a valve and a pump, are located between two devices. The sensor 29 includes a flow meter 41, a pressure gauge 42, and a thermometer 43. To be specific, the sensor 29 measures the flow rate, pressure, and temperature of the hydrogen fuel which has passed through the pressure pump 26.

The control valve 30 is located downstream of the sensor 29 in the fuel supply passage 22. It is desirable that the control valve 30 be located adjacent to the sensor 29. The control valve 30 adjusts the flow rate of the hydrogen fuel which has passed through the sensor 29. A shutoff valve 31 is located downstream of the control valve 30 in the fuel supply passage 22. The presence and arrangement of the shutoff valves 24, 27, and 31 are optional.

The control valve 30 may be located upstream of the sensor 29 in the fuel supply passage 22 or may be located upstream and downstream of the sensor 29 in the fuel supply passage 22. In both cases, it is desirable that the control valve 30 be located adjacent to the sensor 29.

The hydrogen fuel supply system 10 includes a controller 32. The controller 32 includes processing circuitry 33. The processing circuitry 33 includes a processor, a system memory, and a storage memory. The processor is, for example, a CPU. The system memory is, for example, a RAM. The storage memory is a hard disk, a flash memory, or a combination thereof. A configuration in which the processor executes the program stored in the storage memory and read into the system memory is one example of the processing circuitry 33. The processing circuitry 33 is configured to control the pressure pump 26 or the control valve 30 in accordance with a measurement signal of the sensor 29. The processing circuitry 33 may be configured to control the feed pump 23. The processing circuitry 33 may be configured to individually or simultaneously control the pressure pump 26, the control valve 30, and the feed pump 23. The measurement signal of the sensor 29 indicates, for example, the pressure or flow rate of the hydrogen fuel.

The processing circuitry 33 drives the feed pump 23 upon receiving an engine start command. The processing circuitry 33 controls the pressure pump 26 to pressurize the hydrogen fuel in the fuel supply passage 22 such that the pressure of the hydrogen fuel becomes the critical pressure Pc or more. The processing circuitry 33 controls the control valve 30 such that the flow rate measured by the sensor 29 becomes a target flow rate. When the pressure measured by the sensor 29 is lower than the critical pressure Pc or when the flow rate measured by the sensor 29 is lower than a predetermined flow rate, the processing circuitry 33 outputs an alert. Moreover, when the temperature measured by the sensor 29 is lower than the critical temperature Tc, the processing circuitry 33 outputs an alert.

When the pressure measured by the sensor 29 becomes lower than the critical pressure Pc, the processing circuitry 33 controls the pressure pump 26 such that the pressure measured by the sensor 29 becomes the critical pressure Pc or more. For example, the processing circuitry 33 can perform feedback control of the pressure pump 26 in accordance with the measurement signal regarding the pressure of the hydrogen fuel which has been measured by the sensor 29.

Moreover, when the flow rate measured by the sensor 29 becomes lower than the predetermined flow rate, the processing circuitry 33 controls the control valve 30 such that the flow rate measured by the sensor 29 becomes the predetermined flow rate. For example, the processing circuitry 33 can control an opening degree of the control valve 30 in accordance with the measurement signal regarding the flow rate of the hydrogen fuel which has been measured by the sensor 29.

Moreover, when the temperature measured by the sensor 29 becomes lower than the critical temperature Tc, the processing circuitry 33 may control the amount of heat input to the liquid hydrogen per unit density in the heat exchanger 28 such that the temperature measured by the sensor 29 becomes the critical temperature Tc or more. For example, when the heat exchanger 28 utilizes a heat source of the engine 6 as a medium, a heat shield may be located upstream of the heat exchanger 28, and an actuator of the heat shield may be controlled so as to change an area where the heat shield covers the heat exchanger 28.

The fuel supply passage 22 includes a first region A1 and a second region A2. The first region A1 is located upstream of the heat exchanger 28. The second region A2 is located in the gas turbine engine 6 and downstream of the heat exchanger 28. The first region A1 of the fuel supply passage 22 is located in the fuselage 2 or the main wing 3. The second region A2 of the fuel supply passage 22 is located in the gas turbine engine 6. The first region A1 of the fuel supply passage 22 is covered with a heat insulating material. Thus, the hydrogen fuel is maintained at a low temperature from the fuel tank 21 up to the heat exchanger 28. On the other hand, the second region A2 of the fuel supply passage 22 is not covered with the heat insulating material. Thus, an increase in the weight of the gas turbine engine 6 is prevented, and a space reduction is suppressed.

In the configuration described above, the sensor 29 is located downstream of the pressure pump 26. Therefore, the processing circuitry 33 controls the pressure pump 26 in accordance with the measurement signal regarding the pressure of the hydrogen fuel which has been measured by the sensor 29, and thus, the pressure of the hydrogen fuel can be maintained within an appropriate range. Therefore, the operation of the engine that uses the hydrogen fuel in the supercritical phase can be stabilized.

Moreover, when the control valve 30 is located downstream of the pressure pump 26 in addition to the sensor 29, the processing circuitry 33 controls the control valve 30 in accordance with the measurement signal regarding the flow rate of the hydrogen fuel which has been measured by the sensor 29, and thus, the flow rate of the hydrogen fuel can be maintained within an appropriate range. Therefore, the output of the engine can be stabilized.

When the control valve 30 is located downstream of the sensor 29, the flow rate of the hydrogen fuel which has not been adjusted by the control valve 30 yet can be measured. Moreover, when the control valve 30 is located upstream of the sensor 29, a fuel supply state to the gas turbine engine 6 after the adjustment by the control valve 30 can be measured.

When the sensor 29 is located adjacent to at least one of the pressure pump 26, the heat exchanger 28, and the control valve 30, another fluid device is not located between the sensor 29 and the above adjacent device. Therefore, the pressure, temperature, and flow rate of the hydrogen fuel can be accurately measured, and abnormalities of the pressure pump 26, the heat exchanger 28, and the control valve 30 can be quickly found.

### Embodiment 2

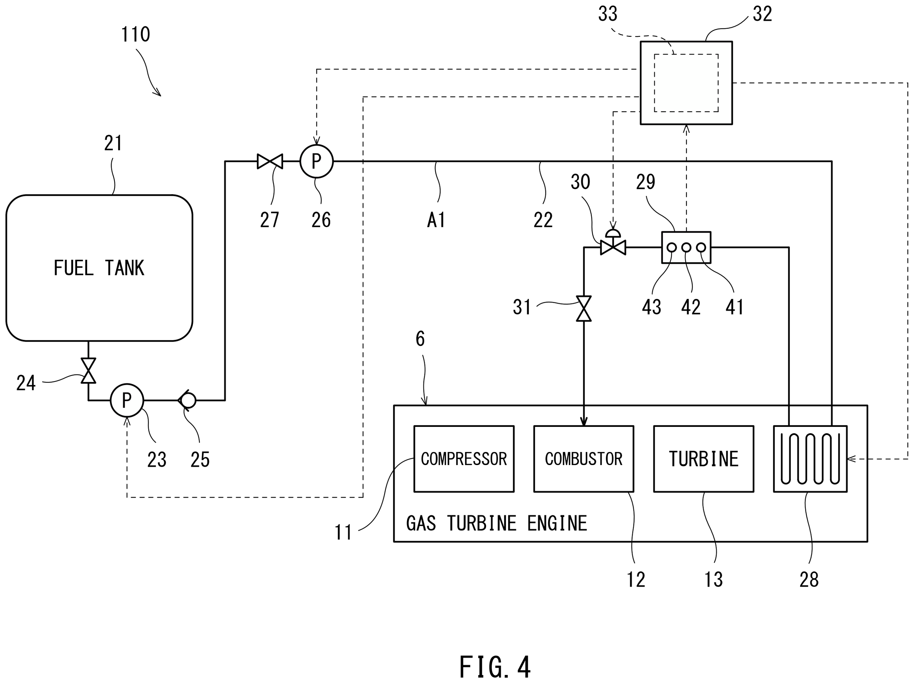

Moreover, FIG. 4 is a block diagram of a hydrogen fuel supply system 110 according to Embodiment 2. The same reference signs are used for the same components as Embodiment 1, and the explanations thereof are omitted. As shown in FIG. 4, the position of the sensor 29 in the hydrogen fuel supply system 110 of Embodiment 2 is different from that in the hydrogen fuel supply system 10 of Embodiment 1. In the present embodiment, the sensor 29 is located downstream of the pressure pump 26 and the heat exchanger 28. It is desirable that the sensor 29 be located adjacent to the heat exchanger 28. Since the other components are the same as those in Embodiment 1, explanations thereof are omitted.

Moreover, the control valve 30 is located downstream of the sensor 29. The control valve 30 may be located upstream of the sensor 29 or may be located downstream and upstream of the sensor 29. In both cases, it is desirable that the control valve 30 be located adjacent to the sensor 29.

In the above-described configuration, since the sensor 29 is located downstream of the heat exchanger 28, the sensor 29 can measure the pressure and the like of the hydrogen fuel at a position close to the gas turbine engine 6. Therefore, the processing circuitry 33 controls the pressure pump 26 in accordance with the measurement signal regarding the pressure and the like of the hydrogen fuel which have been measured by the sensor 29, and thus, the pressure and the like of the hydrogen fuel can be maintained within appropriate ranges. Therefore, the operation of the engine that uses the hydrogen fuel in the supercritical phase can be stabilized.

The foregoing has described the embodiments as examples of the technology disclosed in the present application. However, the technology in the present disclosure is not limited to these and is applicable to embodiments in which modifications, replacements, additions, omissions, and the like have been suitably made. Moreover, a new embodiment may be prepared by combining the components described in the above embodiments. For example, some of components or methods in one embodiment may be applied to another embodiment. Some components in an embodiment may be separated from the other components in the embodiment and arbitrarily extracted. Furthermore, the components shown in the attached drawings and the detailed explanations include not only components essential to solve the problems but also components for exemplifying the above technology and not essential to solve the problems.

The functionality of the elements disclosed herein may be implemented using circuitry or processing circuitry which includes general purpose processors, special purpose processors, integrated circuits, ASICs ("Application Specific Integrated Circuits"), FPGAs ("Field Programmable Gate Arrays"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The following aspects disclose preferred embodiments.

### First Aspect

A hydrogen fuel supply system of an aircraft including an engine,
the hydrogen fuel supply system including:
a fuel tank storing hydrogen fuel in a liquid phase;
a fuel supply passage connecting the fuel tank to the engine;
a pressure pump that is located in the fuel supply passage and pressurizes the hydrogen fuel to critical pressure or more; and
a sensor that is located downstream of the pressure pump in the fuel supply passage and measures pressure of the hydrogen fuel which has passed through the pressure pump.

According to this configuration, when the hydrogen fuel is pressurized by the pressure pump to the critical pressure or more, the sensor located downstream of the pressure pump can measure the pressure of the hydrogen fuel. Therefore, the operation of the pressure pump can be controlled in accordance with the pressure of the hydrogen fuel, and the operation of the engine that uses the hydrogen fuel in the supercritical phase can be stabilized.

### Second Aspect

The hydrogen fuel supply system according to the first aspect, further including a heat exchanger that is located downstream of the pressure pump in the fuel supply passage and heats the hydrogen fuel to a critical temperature or more.

According to this configuration, after the hydrogen fuel is pressurized by the pressure pump to the critical pressure or more, the hydrogen fuel can be heated by the heat exchanger to the critical temperature or more. Thus, the hydrogen fuel can be smoothly changed to the supercritical phase.

### Third Aspect

The hydrogen fuel supply system according to the first or second aspect, further including a control valve that is located downstream of the pressure pump in the fuel supply passage and controls a flow rate of the hydrogen fuel which has passed through the pressure pump.

According to this configuration, the flow rate of the hydrogen fuel supplied to the engine can be adjusted by the control valve.

### Fourth Aspect

The hydrogen fuel supply system according to the second or third aspect, wherein the sensor is located upstream of the heat exchanger in the fuel supply passage and measures the pressure and temperature of the hydrogen fuel which has passed through the pressure pump.

According to this configuration, the pressure and temperature of the hydrogen fuel which has passed through the pressure pump can be measured by the sensor. Therefore, the operation of the pressure pump can be controlled in accordance with the pressure and temperature of the hydrogen fuel located downstream of the pressure pump, and the operation of the engine that uses the hydrogen fuel in the supercritical phase can be stabilized.

### Fifth Aspect

The hydrogen fuel supply system according to the second or third aspect, wherein the sensor is located downstream of the heat exchanger in the fuel supply passage and measures the pressure and temperature of the hydrogen fuel which has passed through the heat exchanger.

According to this configuration, the pressure and temperature of the hydrogen fuel which has passed through the pressure pump and the heat exchanger can be measured by the sensor. Therefore, the operation of the pressure pump can be controlled in accordance with the pressure and temperature of the hydrogen fuel located downstream of the heat exchanger, and the operation of the engine that uses the hydrogen fuel in the supercritical phase can be stabilized.

### Sixth Aspect

The hydrogen fuel supply system according to any one of the first to fifth aspects, wherein the sensor is located adjacent to the pressure pump.

According to this configuration, since the sensor is located adjacent to the pressure pump, the pressure and temperature of the hydrogen fuel discharged by the pressure pump can be further accurately measured.

### Seventh Aspect

The hydrogen fuel supply system according to any one of the first to fifth aspects, wherein the sensor is located adjacent to at least one of the pressure pump or the heat exchanger.

According to this configuration, the pressure and temperature of the hydrogen fuel directly related to at least one of the pressure pump or the heat exchanger can be further accurately measured.

### Eighth Aspect

The hydrogen fuel supply system according to any one of the third to fifth aspects, wherein the sensor is located adjacent to at least one of the pressure pump, the heat exchanger, or the control valve.

According to this configuration, the pressure and temperature of the hydrogen fuel directly related to at least one of the pressure pump, the heat exchanger, or the control valve can be further accurately measured.

### Ninth Aspect

The hydrogen fuel supply system according to any one of the first to eighth aspects, wherein the sensor further measures a flow rate of the hydrogen fuel which has passed through the pressure pump.

According to this configuration, the flow rate of the hydrogen fuel can be accurately measured. Therefore, the output of the engine can be accurately controlled.

### Tenth Aspect

The hydrogen fuel supply system according to any one of the first to ninth aspects, further including processing circuitry configured to control the pressure pump in accordance with a measurement signal regarding the pressure measured by the sensor.

According to this configuration, even when pressure fluctuation occurs in the fuel supply passage by the change in the opening degree of the control valve, the pressure fluctuation can be reduced by controlling the pressure pump. Therefore, the pressure of the hydrogen fuel supplied to the engine can be maintained within an appropriate range.

### Eleventh Aspect

The hydrogen fuel supply system according to the ninth aspect, further including processing circuitry configured to control an opening degree of the control valve in accordance with a measurement signal regarding the flow rate measured by the sensor.

According to this configuration, since the control valve is controlled in accordance with the flow rate measured by the sensor, the flow rate of the hydrogen fuel supplied to the engine can be accurately adjusted.

### Twelfth Aspect

The hydrogen fuel supply system according to any one of the first to eleventh aspects, wherein:
the aircraft includes
   a fuselage,
   a main wing connected to the fuselage, and
   the engine connected to the main wing;
the fuel tank is located in the fuselage or the main wing;
the heat exchanger is located in the engine;
the fuel supply passage includes
   a first region located in the fuselage or the main wing and upstream of the heat exchanger and
   a second region located in the engine and downstream of the heat exchanger;
the first region is covered with a heat insulating material; and
the second region is not covered with the heat insulating material.

According to this configuration, while maintaining the hydrogen fuel at a low temperature up to the heat exchanger, the increase in the weight is prevented by omitting the heat insulating material around the engine, and the space around the engine can be prevented from decreasing.

### Reference Signs List

- 1: aircraft
- 2: fuselage
- 3: main wing
- 6: gas turbine engine
- 10: hydrogen fuel supply system
- 21: fuel tank
- 22: fuel supply passage
- 26: pressure pump
- 28: heat exchanger
- 29: sensor
- 30: control valve
- 33: processing circuitry
- 41: flow meter
- 42: pressure gauge
- 43: thermometer
- A1: first region
- A2: second region

## Claims

1. A hydrogen fuel supply system of an aircraft including an engine,
the hydrogen fuel supply system comprising:
a fuel tank storing hydrogen fuel in a liquid phase;
a fuel supply passage connecting the fuel tank to the engine;
a pressure pump that is located in the fuel supply passage and pressurizes the hydrogen fuel to critical pressure or more; and
a sensor that is located downstream of the pressure pump in the fuel supply passage and measures pressure of the hydrogen fuel which has passed through the pressure pump.

2. The hydrogen fuel supply system according to claim 1, further comprising a heat exchanger that is located downstream of the pressure pump in the fuel supply passage and heats the hydrogen fuel to a critical temperature or more.

3. The hydrogen fuel supply system according to claim 1 or 2, further comprising a control valve that is located downstream of the pressure pump in the fuel supply passage and controls a flow rate of the hydrogen fuel which has passed through the pressure pump.

4. The hydrogen fuel supply system according to claim 2 or 3, wherein the sensor is located upstream of the heat exchanger in the fuel supply passage and measures the pressure and temperature of the hydrogen fuel which has passed through the pressure pump.

5. The hydrogen fuel supply system according to claim 2 or 3, wherein the sensor is located downstream of the heat exchanger in the fuel supply passage and measures the pressure and temperature of the hydrogen fuel which has passed through the heat exchanger.

6. The hydrogen fuel supply system according to any one of claims 1 to 5, wherein the sensor is located adjacent to the pressure pump.

7. The hydrogen fuel supply system according to any one of claims 1 to 5, wherein the sensor is located adjacent to at least one of the pressure pump or the heat exchanger.

8. The hydrogen fuel supply system according to any one of claims 3 to 5, wherein the sensor is located adjacent to at least one of the pressure pump, the heat exchanger, or the control valve.

9. The hydrogen fuel supply system according to any one of claims 1 to 8, wherein the sensor further measures a flow rate of the hydrogen fuel which has passed through the pressure pump.

10. The hydrogen fuel supply system according to any one of claims 1 to 9, further comprising processing circuitry configured to control the pressure pump in accordance with a measurement signal regarding the pressure measured by the sensor.

11. The hydrogen fuel supply system according to claim 9, further comprising processing circuitry configured to control an opening degree of the control valve in accordance with a measurement signal regarding the flow rate measured by the sensor.

12. The hydrogen fuel supply system according to any one of claims 1 to 11, wherein:
the aircraft includes
a fuselage,
a main wing connected to the fuselage, and
the engine connected to the main wing;
the fuel tank is located in the fuselage or the main wing;
the heat exchanger is located in the engine;
the fuel supply passage includes
a first region located in the fuselage or the main wing and upstream of the heat exchanger and
a second region located in the engine and downstream of the heat exchanger;
the first region is covered with a heat insulating material; and
the second region is not covered with the heat insulating material.
